# EUROPEAN PATENT APPLICATION

(11) **EP 1 779 964 A1**
(43) Date of publication of application: **02.05.2007**
(21) Application number: 06022513.3
(22) Date of filing: 27.10.2006
(51) Int. Cl.: B23P 11/00, F16B 5/04, B21K 25/00

(54) **Radially displaceable bushing for retaining a member relative to a structural workpiece**

(30) Priority: 28.10.2005 US 731322 P
(71) Applicant: Fatigue Technology, Inc., Seattle, WA 98188 (US)
(72) Inventor: Rawlins, Nathaniel P., Tacoma Washington 98465 (US); Weiss, Mark R., Seattle Washington 98125 (US)
(74) Representative: Grünecker, Kinkeldey, Stockmair & Schwanhäusser Anwaltssozietät

(57) **Abstract**

A structural assembly for use with a structural workpiece (102) includes a bushing (104) and a first member (106), such as a washer. The bushing (104) is placed in an opening of the structural workpiece (102) and the first member is placed on the bushing. A portion (122) of the bushing (106) within the opening of the structural workpiece (102) is radially expanded (e.g., with a tapered mandrel (140)) into the structural workpiece (102) to achieve an interference fit therewith. An extended portion of the bushing (104) is radially expanded to generate a swaged portion. The swaged portion mechanically captures and retains the first member on the bushing (104) and against the structural workpiece (102). The combination of a radial flange on the bushing (104) and the retained first member (106), on opposite surfaces of the structural workpiece (102), respectively, may operate as bearing surfaces for thrust loading in more than one direction.

## Description

### FIELD OF DISCLOSURE

This disclosure generally relates to a structural assembly and methods of installing the same in which a bushing is radially displaced to mechanically retain another member, such as a washer, relative to a workpiece.

### BACKGROUND DISCUSSION

Expandable structural assemblies are often installed in workpieces using a tapered mandrel. A variety of structural assemblies and methods of radial expansion using tapered mandrels with or without a split sleeve are described in U.S. Patent Nos. 3,556,662; 3,892,121; 4,471,643; 4,557,033; 5,083,363; 5,096,349; 5,103,548; 5,127,254; 5,305,627; 5,341,559; 5,433,100; and U.S. Patent Application Nos. 10/619,226 (Publication No. 2005/0005669) and 10/633,294 (Publication No. 2005/0025601). These references disclose methods of radially expanding bushings into structural workpieces to improve fatigue performance of the workpieces.

Bushings often include a single radial flange that serves as a bearing surface. When installed, the radial flange can have a rear face abutting a workpiece and a front face opposing the rear face. The front face can act as a bearing surface and is often machined to achieve the desired overall tolerances. In the event that two bearing surfaces are needed (e.g., bearing surfaces are needed on opposing sides of the workpiece) or in the event that too much material was machined from the front face of the bushing's flange, one option is to utilize a dual bushing assembly. U.S. Patent Application No. 10/726,809 (Publication No. 2004/0111864) describes dual bushing assemblies and methods of installing the same.

In some applications, however, it may be advantageous to have a washer or plate on the surface of the structural workpiece opposite the radial flange of the bushing. The washer or plate can be bonded or riveted to the structural workpiece. Unfortunately, bonding, riveting, and similar coupling process often increases manufacturing costs due to additional installation time, increased level of skilled labor, and increased material costs. Therefore, it would be desirable to have an improved structural assembly.

### SUMMARY

The embodiments described herein are generally related to structural assemblies and methods of installing the same in workpieces. Some embodiments of multi-piece structural assemblies include an expandable member and an engagement member. The expandable member can be installed in a workpiece to couple the engagement member to the workpiece.

A main portion of the expandable member can be radially expanded (e.g., with a tapered mandrel) in an opening of the workpiece to achieve an interference fit therewith. An end portion of the expandable member can extend away from the workpiece. The engagement member can be mounted on the end portion of the expandable member. The end portion is then radially expanded with a swage mandrel to position the engagement member with respect to the workpiece. In this manner, the multi-piece structural assembly can be easily and rapidly installed using a multi-step expansion process. The installed structural assembly can withstand loads (e.g., thrust loads) in one or more directions. The installed structural assembly, for example, can be somewhat axially and/or rotationally fixed relative to the workpiece, even under dynamic loading, static loading, or both.

In some embodiments, the expandable member is a bushing having a radial flange. The main portion of the bushing extends between the flange and the end portion. The engagement member can be a washer sized to receive the end portion of the bushing such that the workpiece is interposed between the flange and the washer. After expanding the end portion, the flange and washer can cooperate to apply compressive forces to opposing sides of the workpiece, thereby snuggly holding the workpiece therebetween.

The washer, in some embodiments, can have an inner surface defining a throughhole with an inner diameter sized to receive the end portion of the bushing. The end portion of the bushing can be radially expanded to move it into physical contact with the inner surface of the washer. For example, the washer can be urged against the structural workpiece during a swage expansion process in which the end portion is expanded from an initial configuration to an expanded and swaged configuration. The swage expansion process can form an angled or flared swaged end portion.

In some embodiments, an assembly is configured for use with a structural workpiece having a first surface, a second surface, and an opening extending from the first surface to the second surface. The assembly comprises a bushing having a hollow body comprising a first portion, a second portion, and a third portion. The second portion extends between the first portion and the third portion. The first portion has a radial flange extending therefrom. The third portion is radially expandable beyond an outer circumference of the second portion, wherein the radial flange is configured to abut against the first surface of the structural workpiece and the third portion is configured to extend longitudinally beyond the second surface of the structural workpiece when the second portion is received in the opening of the structural workpiece. The assembly also includes a first member having a first face, a second face, and an inner surface defining a passageway extending between the first face and the second face. The first face is configured to be adjacent to the structural workpiece. The inner surface is positionable on the third portion of the bushing and comprises a first section and a second section angled with respect to the first section. The third portion is movable between an initial position and a swaged position. The third portion contacts the angled second section to retain and at least longitudinally fix the first member to the structural workpiece when the third portion is in the swaged position.

In yet other embodiments, an installed structural assembly comprises a workpiece having a first surface, a second surface opposing the first surface, and an opening extending from the first surface to the second surface. A bushing having a hollow body is positioned in the opening of the workpiece. The hollow body comprises a first portion, a second portion, and a third portion, the first portion having an outwardly extending member extending along the first surface of the workpiece. The second portion is positioned between the first portion and the third portion. The third portion has flared swaged section that extends outwardly from the second surface of the workpiece. An engagement member has an inner surface, a first face, and a second face opposing the first face, the first face of the engagement member facing the second surface of the workpiece. The swaged section of the bushing is configured to contact the inner surface so as to at least longitudinally fix the member against the workpiece.

In one aspect, a structural workpiece has a first surface, a second surface, and an opening extending from the first surface to the second surface. The workpiece receives a multi-piece assembly that includes a bushing and a first member. In some embodiments, the bushing has a hollow body comprising a first portion, a second portion, and a third portion. The first portion is coupled to the second portion and has a radial flange extending therefrom. The radial flange can be abutted against or adjacent to the first surface of the structural workpiece. The second portion can be received in the opening of the structural workpiece. The third portion is coupled to the second portion and extends longitudinally beyond the second surface of the structural workpiece. At least a portion of the third portion is radially expandable beyond an outer circumference of the second portion. In some embodiments, the first member has an inner surface and a first surface. The inner surface engages the third portion of the bushing. The first surface of the first member is contiguous with the structural workpiece. The inner surface of the first member comprises a generally straight section coupled to an angled section. When installed, the end portion of the bushing is swaged to contact the angled section to at least longitudinally fix the first member to the structural workpiece.

In another aspect, a method of retaining a first member relative to a structural workpiece includes inserting a bushing into an opening in the structural workpiece. The bushing has a hollow body including a first portion, a second portion, and a third portion. The first portion is coupled to the second portion and has a radial flange extending therefrom. The radial flange is near or abutted against one surface of the structural workpiece. The second portion is received in the opening of the structural workpiece. The third portion is coupled to the second portion and extends longitudinally beyond an opposite surface of the structural workpiece. A first member is placed onto the third portion of the bushing such that the member is generally contiguous with the structural workpiece. At least the second portion of the bushing is radially expanded into the structural workpiece. At least a section of the third portion of the bushing is radially swaged to form a swaged portion that contacts an angled section of an inner surface of the first member to longitudinally retain the member on the bushing and to urge the member against the structural workpiece.

In yet other aspects, a method of mounting an engagement member to a workpiece is provided. The engagement member has an inner surface that defines an opening. The method includes placing a bushing in a hole in the workpiece such that an expandable end portion of the bushing extends outwardly from the workpiece. The expandable end portion of the bushing is placed in the opening of the engagement member. At least a portion of the inner surface of the engagement member defines a circumference greater than an outer circumference of the bushing. The end portion is radially expanded with a tapered swaging mandrel to bring the end portion into contact with the at least a portion of the inner surface to axially fix the engagement member relative to the workpiece.

### BRIEF DESCRIPTION OF THE DRAWINGS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn, are not intended to convey any information regarding the actual shape of the particular elements, and have been solely selected for ease of recognition in the drawings.
Figure 1 A is a cross-sectional view of a structural assembly positioned in a structural workpiece, where a bushing of the structural assembly is in an initial unexpanded position, according to one illustrated embodiment.
Figure 1B is an enlarged cross-sectional view of the structural assembly and workpiece of Figure 1A.
Figure 1C is an enlarged cross-sectional view of an engagement member and a portion of the bushing of the structural assembly of Figure 1A.
Figure 2 is an isometric, partial cross-sectional view of the structural assembly of Figure 1A, where a swaging mandrel is being moved towards the radially expanded bushing, according to one illustrated embodiment.
Figure 3A is an isometric, partial cross-sectional view of the structural assembly of Figure 2, where a swaged portion of the bushing retains the engagement member relative to the structural workpiece.
Figure 3B is an enlarged, partial cross-sectional view of the swaged portion and engagement member of the structural assembly of Figure 3A.

### DETAILED DESCRIPTION

In the following description, certain specific details are set forth in order to provide a thorough understanding of various embodiments. However, one skilled in the art will understand that the embodiments may be practiced without these details. In some instances, well-known structures associated with cold expansion tooling, expansion mandrels, and various assemblies and/or methods regarding structural retention have not necessarily been shown or described in detail to avoid unnecessarily obscuring descriptions of the embodiments. In addition, well-known cold expansion and/or cold working methods and/or processes, which may include installing structural assemblies into the opening of a structural workpiece have also not necessarily been shown or described in detail to avoid unnecessarily obscuring descriptions of the embodiments of the invention. It is appreciated and understood that the process of installing structural assemblies into the opening of the structural workpiece may or may not result in the creation of an annular zone of residual compressive stresses in the structural workpiece and/or other associated structure.

In the following description and for purposes of brevity, reference may be made to cold expansion or radial expansion of various components. This reference is not intended to limit or otherwise narrow the scope of the disclosure. The process of radial expansion is to be broadly interpreted as any process that radially expands at least some of the material of a component either directly or indirectly (e.g., radially expanding a washer into another member). The radial expansion may be done for a number of purposes or combination of purposes, such as retarding the initiation and growth of a fatigue crack, achieving a fatigue benefit in the structural workpiece, mechanically capturing a component, retaining a component against the structural workpiece, or some combination thereof. It is further understood that radially expanding one component in the structural workpiece may or may not induce beneficial compressive residual stresses and may or may not produce fatigue-enhancing benefits in other outlying or nested components.

Unless the context requires otherwise, throughout the specification and claims which follow, the word "comprise" and variations thereof, such as, "comprises" and "comprising," are to be construed in an open, inclusive sense, that is as "including, but not limited to."

It should be noted that, as used in this specification and the appended claims, the singular forms "a," "an," and "the" include plural referents unless the content clearly dictates otherwise. Thus, for example, reference to a structural assembly including "a washer" includes a washer, or two or more washers. It should also be noted that the term "or" is generally employed in its sense including "and/or" unless the content clearly dictates otherwise.

The headings provided herein are for convenience only and do not interpret the scope or meaning of the claimed invention.

The following description relates to a structural assembly that includes an expandable member and an engagement member configured to engage the expandable member. The expandable member can be installed in an opening of a structural workpiece and includes a radially outwardly extending flange that cooperates with the engagement member to react loads (e.g., axial loads such as thrust loads). When installed, the outwardly extending flange and engagement member can securely couple the expandable member to the workpiece while enhancing performance (e.g., fatigue performance) of the workpiece. The structural workpiece can be compressed or otherwise tightly held between the flange and the engagement member.

As used herein, the term "expandable member" is a broad term and includes, but is not limited to, a bushing, sleeve (including a split sleeve), fitting, fastener, and other structures that are suitable for coupling to a workpiece. In some embodiments, the expandable member can be expanded from a first configuration (pre-installed configuration) to a second configuration (installed configuration). For example, the expandable member may be a bushing that is radially expanded an amount sufficient to form an interference fit with a hole in a workpiece. The expandable member can be further expanded to hold the engagement member against the workpiece. The term expandable member refers to a member in a pre-expanded state and a post-expanded state, unless the context dictates otherwise.

The expandable member can be a bushing for cold working. A bushing can be, without limitation, a generally cylindrical liner or fitting used to contain, reduce frictional interaction, and/or define a passageway in which one or more components (e.g., hoses, wires, conduits, and the like) can pass through. The type and configuration of the bushing can be selected based on, for example, the desired compressive residual stresses in the workpiece, function of the bushing, and other criteria known in the art. The bushing can include a radially outwardly extending member, an end portion, and a hollow body extending therebetween. The end portion of the expandable member can extend generally along a longitudinal axis of the expandable member. For example, the end portion can extend in a direction substantially parallel to a long axis of the expandable member.

The bushing and engagement member may be used to control clearances. The installed structural assembly, for example, can have a relatively small profile as compared to traditional bushing assemblies, thereby providing flexibility when choosing an appropriate installation location. The bushing, engagement member, or both can be machined or otherwise processed to achieve the desired clearance. For example, any portion of the bushing protruding from the engagement member can be made, for example, flush with the engagement member.

The engagement member can be a thrust-bearing member (e.g., a washer), a back-up or reinforcement plate (e.g., hard-point structure) around an opening, and/or a coupling mechanism. Coupling mechanisms can be used for electrical connections, fluid connections, conduit assembly, and/or other types of assemblies coupled to the workpiece. As used herein, the term "washer" is a broad term and includes, but is not limited to, a ring or ring-like member used to provide tightness to a joint, to relieve friction, to prevent leakage, and/or to distribute pressure. In some embodiments, a washer can be a somewhat flat disk with a throughhole. For example, the washer can be continuous or discontinuous (e.g., a split ring washer) disk shaped member. The washer can be made of plastic, metal, composite, ceramic, combinations thereof, and other materials suitable for contacting a workpiece.

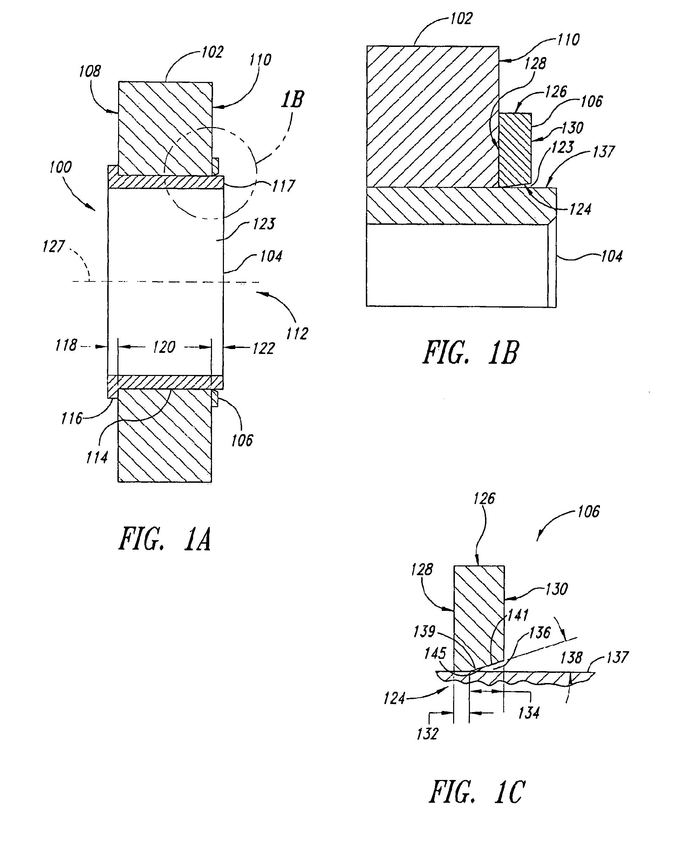

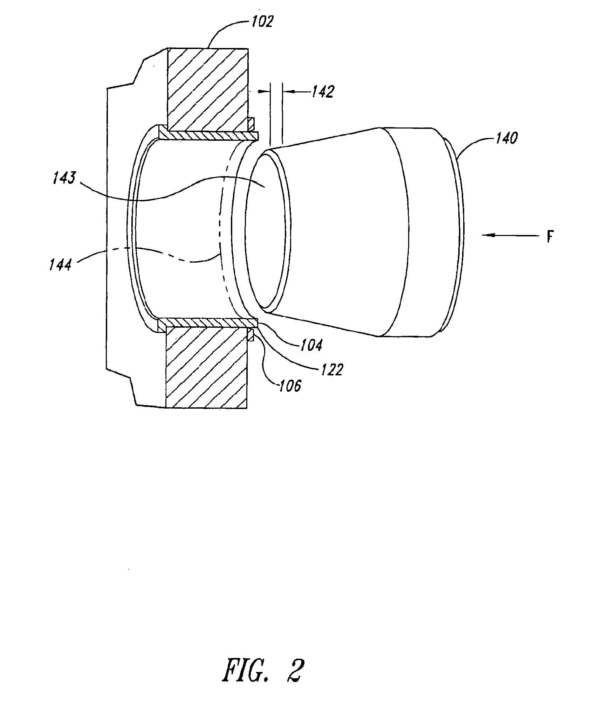

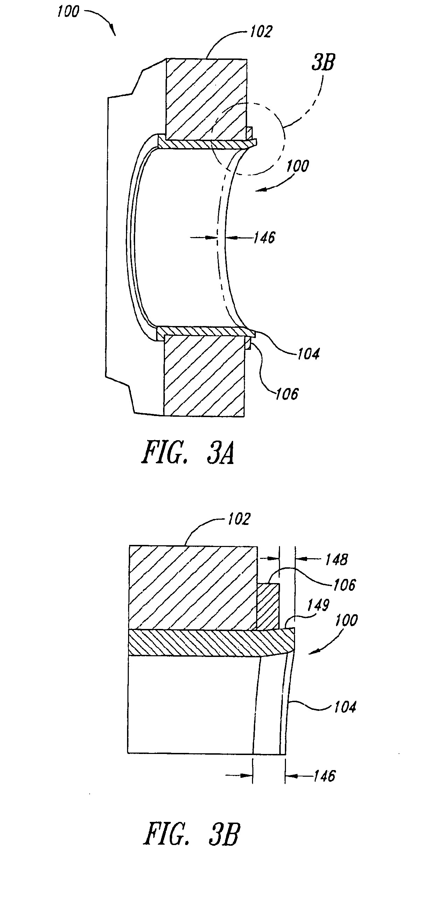

Figure 1A shows a structural assembly 100 having a structural workpiece 102, an unexpanded bushing 104, and a washer 106. The unexpanded bushing 104 extends through the workpiece 102 and washer 106, where the washer 106 is near or adjacent to the workpiece 102. Generally, the bushing 104 can be expanded to form an interference fit with the workpiece 102 (as shown in Figure 2). The bushing 104 can then be expanded again to hold the washer 106 near or against the workpiece 102, as shown in Figure 3A.

As used herein, the term "workpiece" is broadly construed to include, without limitation, a parent structure having at least one hole or opening suitable for processing (e.g., receiving an expandable member, undergoing cold expansion, etc.). The hole can be, for example, a through hole, counter bore, or other type of hole. The workpiece 102, for example, can be a lug, panel, web, spar, rib, conduit, fitting, outer bushing, grommet, outer sleeve, and/or some other type of structure. In some embodiments, the workpiece is a bulkhead, fuselage, engine, or other structural member of an aircraft. The exemplary workpieces provided above are for illustrative purposes and are not meant to limit or narrow the scope of the claims. The illustrated structural workpiece 102 is representative of any structural member and may be made from a variety of materials, such as metal, composite (e.g., fiber-reinforced composite), plastic, combinations thereof, or other materials suitable for engaging the structural assembly 100.

The illustrated structural workpiece 102 of Figure 1 A includes a first surface 108, a second surface 110 opposing the first surface 108, and at least one opening 112 extending from the first surface 108 to the second surface 110. The bushing 104 is closely received by the opening 112 of the workpiece 102.

The illustrated bushing 104 of Figure 1A includes a tubular body 114 and a radial flange 116 connected to the tubular body 114. The tubular body 114 includes a first portion 118, a second portion 120, and a third portion 122. The radial flange 116 is coupled to the first portion 118. The second portion 120 extends generally between the first surface 108 and the second surface 110 of the structural workpiece 102. The third portion 122 can extend outwardly from the first surface 110 of the structural workpiece 102. The third portion 122 can also extend at least partially through a passageway 123 (see Figure 1 B) of the washer 106. The illustrated bushing 104 extends in the direction of its longitudinal axis 127 beyond the first member 106.

Figures 1 B and 1C show close-up views of the washer 106 positioned on the bushing 104 and at least proximate the second surface 110 of the structural workpiece 102. As shown in Figure 1B, the washer 106 includes an inner surface 124 defining the passageway 123, an outer surface 126 opposing the inner surface 124, an abutment surface 128, and a bearing surface 130, according to the illustrated embodiment. The abutment surface 128 contacts or is adjacent to the second surface 110 of the structural workpiece 102. If the washer 106 is spaced from the workpiece 102, the swaging expansion process (described in connection with Figure 2) can move the washer 106 against the second surface 110 of the workpiece 102, if needed or desired.

Figure 1C shows the inner surface 124 of the washer 106 including a generally straight section 132 and an angled section 134. A gap 136 can be formed between the angled section 134 and an outer surface 137 of the bushing 104. In some embodiments, including the illustrated embodiment of Figure 1C, an angle 138 is defined by the angled section 134 and the outer surface 137. Although the illustrated angle 138 is fairly large, it is understood that the angle 138 may be quite shallow. For example, the angle 138 can be equal to or smaller than about 10 degrees. In some embodiments, the angle 138 is equal to or larger than about 2 degrees, 4 degrees, 5 degrees, 10 degrees, or ranges encompassing such angles. In one embodiment, the angle 138 is in the range of about 10 degrees to about 30 degrees. The angle 138 can also be larger than 30 degrees. One or more ductile materials can be used to reduce, limit, or substantially eliminate cracking of the bushing 104. Such a large angle may result in significant displacement of the third portion 122 of the bushing 104 during the swaging process. Thus, swaging or similar processes may cause cracking or unacceptable strain energy levels in the structural assembly 100, especially if brittle materials are used to form the structural assembly 100.

The illustrated angled section 134 has a first perimeter 139 proximate the section 132 and a second perimeter 141 proximate the bearing surface 130. The perimeter of the angled section 134 can increase (e.g., gradually increase, incrementally increase, uniformly increase, etc.) from the first perimeter 139 to the second perimeter 141. In the illustrated embodiment, the angled section 134 defines a generally frusto-conical surface 145 extending between the straight section 132 and the bearing surface 130. In other embodiment, the surface 145 can have regular or irregular configurations or any other configuration suitable for engaging the swaged bushing 104. In some embodiments, the surface 145 can be concave, convex, flat, or combinations thereof.

With reference to Figures 1A to 1C, the illustrated unexpanded bushing 104 can be radially expanded into the structural workpiece 102 by at least one of the methods described in the above-referenced patents, patent applications, combinations thereof, or by an equivalent method. One type of radial expansion method that may be used is moving a tapered mandrel through the passageway 123 of the bushing 104 to radially expand the bushing 104 into the structural workpiece 102. The flange 116 can seat against the first surface 108 during the process. The bushing 104 can be radially expanded a sufficient amount to cold work or otherwise process an adjacent region of the structural workpiece 102. This expansion process may provide some retention of the washer 106 with respect to the post-expanded bushing 104, workpiece 102, or both. In some embodiments, the washer 106 is fixed (e.g., axially fixed, rotationally fixed, or otherwise fixed) with respect to the workpiece 102, bushing 106, or both. The washer 106 can be at least longitudinally fixed relative to the bushing 104 and positioned next to or against the structural workpiece 102.

It is understood that the washer 106 may be loosely retained on the bushing 104. For example, the washer 106 can be rotationally free relative to the outer surface 137 of the expanded bushing 104 and/or relative to the structural workpiece 102.

It has been found that the materials of the various components of the structural assembly 100, the amount of pull force on the tapered mandrel, and possibly other parameters may limit or prevent the washer 106 from being adequately retained relative to the bushing 104 and/or structural workpiece 102. For example, when the material of the structural workpiece 102 has a higher elastic energy than both the bushing 104 and washer 106, testing (e.g., testing using Finite Element Analysis (FEA)) has shown that the interference necessary to retain and fix the washer 106 relative to the bushing 104 and the structural workpiece 102 was not readily achievable. In order to achieve a high degree of retention/fixation of the washer 106 relative to the bushing 104 and the structural workpiece 102, testing has shown that the amount of expansion would have to exceed a threshold amount of expansion that would likely induce an unwanted amount of cracking (e.g., stress cracking, micro-cracking, and other types of cracking) in the bushing 104 and/or structural workpiece 102. The bushing 104 can be subjected to another expansion process to achieve the desired performance.

Figure 2 shows the bushing 104 after it has been radially expanded by, for example, one of the tapered mandrels discussed above and in accordance with known radial expansion methods and/or processes, which may be those that are described in the above-referenced patents and/or patent applications. In Figure 2 also shows mandrel 140 about to engage the third portion 122 of the bushing 104 to perform another expansion process. In the illustrated embodiment, the mandrel 140 is in the form of a swaging mandrel spaced from the installed bushing 104.

A tapered section 141 of the swaging mandrel 140 is forced into the bushing 104 with a force "F" to a desired penetration depth 142 such that the end 143 of the tapered section 141 is positioned at 144 (indicated in phantom line in Figure 2). The force F applied to the swaging mandrel 140, the insertion depth 142 of the swaging mandrel 140, and the configuration of the mandrel 140 (e.g., the rate of taper of the tapered section 141) may be selected so that the washer 106 is held between the swaged bushing 104 and the workpiece 102, as shown in Figure 3A.

The washer 106 can be retained relative to the structural workpiece 102 and the amount of strain energy or preload in the bushing 104 can remain below an identified threshold. The force F is applied to the swaging mandrel 140 to swage (e.g., radially displace) the third portion 122 and possibly some of the second portion 120 of the bushing 104. In some embodiments, the amount of force F applied to the swaging mandrel 140 can be varied during insertion to help urge the mandrel 140 into the bushing 104 to the desired penetration depth 142. That is, varying the force F can help work the tapered section 141 into the bushing 104. In other embodiments, the force F can be a generally a constant force.

Figures 3A and 3B show the structural assembly 100 after the swaging mandrel 140 has been inserted into and then retracted from the bushing 104. In Figure 3A, the end portion 122 of the bushing 104 is swaged. Figure 3B shows a close-up view of a swaged portion 146 of the bushing 104. To close the gap 136 (Figure 1 C) that previously existed between the inner surface 124 of the washer 106 and the bushing 104, the end portion 123 can be swaged to form the swaged portion 146.

The swaged portion 146 can be flared or otherwise expanded radially outward and may advantageously longitudinally fix the washer 106 on the bushing 104, may maintain tight contact between the washer 106 and the second surface 110 of the structural workpiece 102, and may fix (e.g., rotationally fix, axially fix, or combinations thereof) the washer 106 relative to the structural workpiece 102. An outer surface 149 of the swaged portion 146 can have a similar configuration as the surface 145 of the bushing 106. Exemplary surfaces 149 can have regular or irregular configurations or any other configuration suitable for engaging the washer 106. Similar to the surface 145, the surface 149 can be concave, convex, flat, or combinations thereof.

The structural assembly 100 of Figures 3A and 3B may advantageously achieve sufficient fixation (e.g., longitudinal fixation, axial fixation, rotational fixation, and combinations thereof) between the bushing 104 and the workpiece 102, between the washer 106 and the bushing 104, or between the washer 106 and the structural workpiece 102. Fixation can be achieved without exceeding the threshold amount of expansion that induces an unwanted amount of cracking. Thus, cracking can be kept at or below an acceptable level.

In some embodiments, fixation of the washer 106 may prevent the washer 106 from being dislodged or loosened from the structural assembly 100 under a variety of dynamic and/or static loading conditions. Accordingly, the washer 106 is well suited for cyclic loading. Moreover, the fixation may be sufficient to reduce, limit, or substantial prevent galling, wear, and other part-to-part contact problems that can arise when relative motion is permitted between parts in contact with one another.

After completion of the swaging process, a section 148 of the bushing 104 may optionally be removed, trimmed, worn down, sanded, or otherwise machined. For example, the section 148 of Figure 3B extending outwardly from the washer 106 can be removed. The bushing 104 and the washer 106, in some embodiments, can be faced, sanded, worn down, or otherwise processed to be within a desired tolerance (e.g., a tolerance associated with the washer 106).

The swaging process described herein may advantageously provide a higher degree of interference between the bushing 104 and the washer 106 than can be achieved by merely radially expanding the body of the bushing 104 with the tapered mandrel alone. In addition, the swaging process may prevent removal of the washer 106 and may sufficiently fix the washer 106 relative to the structural workpiece 102. The swaged portion 146 of the bushing 104 can sufficiently capture, retain, and/or fix (e.g., lock) the washer 106 relative to the structural workpiece 102 so that no additional or alternative mechanical attachment technique is necessary, such as applying adhesive between the washer 106 and structural workpiece 102 or installing rivets. Thus, the washer 106 can be rapidly and conveniently secured against the workpiece 102. In some embodiments, however, adhesives, bonding agents, fasteners (e.g., rivets), or other coupling means can also be used to further reduce or limit undesirable relative movement of the structural assembly 100.

The various embodiments described above can be combined to provide further embodiments. All of the above U.S. patents, patent applications and publications referred to in this specification as well as U.S. Patent Nos. 3, 556, 662; 3,892,121; 4,471,643; 4,557,033; 5,083,363; 5,096,349; 5,103,548; 5,127,254; 5,305,627; 5,341,559; 5,433,100; and U.S. Patent Application Nos. 09/603,857; 10/619,226 (Publication No. 2005/0005669); 10/633,294 (Publication No. 2005/0025601); and 10/726,809 (Publication No.2004/0111864) are incorporated herein by reference. Aspects can be modified, if necessary, to employ devices, features, and concepts of the various patents, applications, and publications to provide yet further embodiments.

These and other changes can be made in light of the above detailed description. In general, in the following claims, the terms used should not be construed to limit the invention to the specific embodiments disclosed in the specification and the claims, but should be construed to include all types of retainer assemblies and/or kits that operate in accordance with the claims. Accordingly, the invention is not limited by the disclosure, but instead its scope is to be determined entirely by the following claims.

## Claims

1. An installed structural assembly, comprising:
a workpiece having a first surface, a second surface opposing the first surface, and an opening extending from the first surface to the second surface;
a bushing having a hollow body positioned in the opening of the workpiece, the hollow body comprising a first portion, a second portion, and a third portion, the first portion having an outwardly extending member extending along the first surface of the workpiece, the second portion positioned between the first portion and the third portion, the third portion having flared swaged section that extends outwardly from the second surface of the workpiece; and
an engagement member having an inner surface, a first face, and a second face opposing the first face, the first face of the engagement member facing the second surface of the workpiece, the swaged section of the bushing configured to contact the inner surface so as to at least longitudinally fix the member against the workpiece.

2. The installed structural assembly of claim 1 wherein the engagement member is a washer or a plate.

3. The installed structural assembly of claim 1 wherein at least a portion of an outer surface of the third portion and at least a portion of the inner surface of the engagement member are both generally frusto-conical in shape.

4. The installed structural assembly of claim 1 wherein the inner surface of the engagement member includes a first section and a second section, the first section having a substantially constant diameter and closely receiving the third portion, the second section extends angularly from the first section towards the second face of the engagement member.

5. The installed structural assembly of claim 4 wherein the second section of the engagement member defines a substantially frusto-conical surface.

6. The installed structural assembly of claim 1 wherein the third portion is flared outwardly.

7. The installed structural assembly of claim 1 wherein the opening of the workpiece has a perimeter that is less than an outer perimeter of at least a portion of the third portion.

8. The installed structural assembly of claim 1 wherein the engagement member has an innermost portion sandwiched between the third portion and the workpiece.

9. The installed structural assembly of claim 1 wherein the workpiece is part of an aircraft.

10. The assembly of claim 1 wherein the third portion is approximately equal in length to an axial length of the inner surface of the engagement member.

11. The assembly of claim 1 wherein the third portion is approximately equal in length to a distance between the first face and opposing second face of the engagement member.

12. The structural assembly of claim 1 wherein the flared swaged section defines an outer perimeter that is greater than an outer perimeter of the second portion.

13. A method of mounting an engagement member to a workpiece, the engagement member having a inner surface that defines an opening, the method comprising:
positioning a bushing in a hole in the workpiece such that an expandable end portion of the bushing extends outwardly from the workpiece;
placing the expandable end portion of the bushing in the opening of the engagement member, at least a portion of the inner surface of the engagement member defining a circumference greater than an outer circumference of the bushing; and
radially expanding the end portion of the bushing with a tapered swage mandrel to bring the end portion into contact with the at least a portion of the inner surface to axially fix the engagement member relative to the workpiece.

14. The method of claim 13 wherein radially expanding the expandable end portion of the bushing causes the engagement member to be pressed against the workpiece.

15. The method of claim 13 wherein the expandable end portion is expanded outward beyond an innermost portion of the member in the radial direction.

16. The method of claim 13 wherein the expandable end portion is radially expanded until the engagement member is rotationally fixed with respect to the bushing.

17. The method of claim 13, further comprising:
before radially expanding the expandable end portion, radially expanding a central hollow body of the bushing into the hole of the workpiece to form an interference fit.
